# EUROPEAN PATENT APPLICATION

(11) **EP 1 882 642 A2**
(43) Date of publication of application: **30.01.2008**
(21) Application number: 07113460.5
(22) Date of filing: 30.07.2007
(51) Int. Cl.: B65D 65/14

(54) **Wrapping for small articles in particular food items**

(30) Priority: 28.07.2006 IT VA20060029 U
(71) Applicant: Porta, Alessandro, 21100 Varese (IT)
(72) Inventor: Porta, Alessandro, 21100 Varese (IT)
(74) Representative: Faggioni, Marco

(57) **Abstract**

Wrapping (W) for packaging small items (B), in particular cheese "bites", sweets, sugared almonds, chocolates, boeri or the like, by means of wrapping around and folding said wrapping (W) onto the item (B) to be packaged and subsequently thermally sealing the peripheral portion thereof, characterised in that the wrapping (W) consists of a film (1) of plastic material having shape memory, provided - on at least part of the inner surface thereof - with a layer of heat-seal lacquer (2) with a large thickness and capable of displaying adhesiveness/stickiness at room temperature.

## Description

The present invention refers to a wrapping for small articles, in particular food items, consisting of a film of plastic material which is wrapped around on the article to be wrapped, closed by being folded on itself, with a possible twist, and by thermal sealing. Packaging of this type is known in the field under the English name of "twist & seal wrap".

Wrappings of the above-described type have been known on the market for a very long time, in particular for the packaging of single-dose food items, such as cheese "bites" (widely used for example are the products BABYBEL^{®} or TRI BITES^{®}), or confectionery such as sweets, sugared almonds, chocolates, boeri (large Italian chocolates filled with liquor and a cherry), or the like. Such wrappings are produced starting from specific plastic materials in films, and precisely cellophane and polyvinilchloride (PVC), which have the characteristic of retaining any shape imparted thereto by wrapping around or folding, without any significant "recovery" to the shape originally held before the wrapping around or folding operation. These materials will be referred to in the following also as materials lacking "shape memory".

The use of materials lacking shape memory is essential in the process of manufacturing the wrapping of the item to be packaged, because it allows to carry out a simpler and cheaper process in two steps, i.e. a first step wherein the film of plastic material is wrapped around and folded/twisted on the item to be packaged, and a second step wherein the film thus folded is thermo-sealed, without - during the nevertheless short time interlapsing between the above-described first and second operation - a partial re-opening of the wrapping, thereby producing a loose or unstable packaging which is unacceptable on the market.

As a matter of fact, cellophane or PVC do not display any change of the shape imparted thereto with the first wrapping around and folding operation, even when the wrapping is released by the mechanical members which have carried out these operations, so that when the heat-seal devices end up operating on the items to be packaged, they find the wrapping still perfectly adhering to the item in the desired position and sealing is hence carried out in an optimal way.

Notwithstanding this positive characteristic of complete lack of shape memory, however, both cellophane and PVC have some serious drawbacks which would make replacement thereof extremely interesting. Firstly, both these materials have a relatively high cost compared to that of the other plastic materials available on the market. As far as PVC specifically is concerned, this is a material with serious disposal problems, due to the possible build up of chlorine-based toxic products; for this reason there is a strong drive towards the elimination thereof and in certain European Union countries (for example in Germany) use thereof has already been banned.

As far as specifically cellophane is concerned, instead, this is a material manufactured on the basis of by now obsolete processes which do not allow to have desirably constant structural qualities (thickness, planarity), which translates into process difficulties during use of the material, which difficulties are made more serious by the fact that it is a material which is extremely sensitive to humidity, i.e. which has dramatic variations of its physical characteristics upon variation of the environmental humidity rate. Moreover, the dwindling of cellophane manufacturers has left existing ones in nearly-monopoly conditions, which affects negatively both the actual, certain availability of the product, and the stability of the corresponding cost.

The object of the present invention is hence that of providing a new wrapping of the above-described type, which may be used for packaging through a folding/twisting process and subsequent sealing in two distinct steps, despite using, as basic material, one of the number of plastic materials with shape memory available on the market at a remarkably lower cost than PVC or cellophane - such as polypropylene, polystyrene, polyester or polyamide (nylon) - materials which per se, as said above, are fully unsuitable for such use.

Such object is achieved by a wrapping having the characteristics defined in the main claim herewith enclosed. Further characteristics are defined in the dependent claims.

The present invention will in any case be better described in detail with reference to the accompanying drawings, wherein:
fig. 1 is a top plan view of a first embodiment of the wrapping of the present invention;
fig. 2 is a section view according to line II-II of fig. 1;
fig. 3 is a section view similar to fig. 2, of a variant of said first embodiment;
fig. 4 is a top plan view of a second embodiment of the wrapping of the present invention;
fig. 5 is a section view according to line V-V of fig. 4;
fig. 6 is a section view similar to fig. 5, of a variant of said second embodiment;
figs. 7A, 7B and 7C are section views along a vertical plane of an item packaged in a wrapping of the invention, which schematically illustrate various possible ways of sealing a first sealing system of the wrapping;
fig. 8 is a section view similar to figs. 7, which shows a second sealing system of the wrapping of the invention; and
fig. 9 is a section view similar to figs. 7, which shows a third sealing system of the wrapping of the invention.

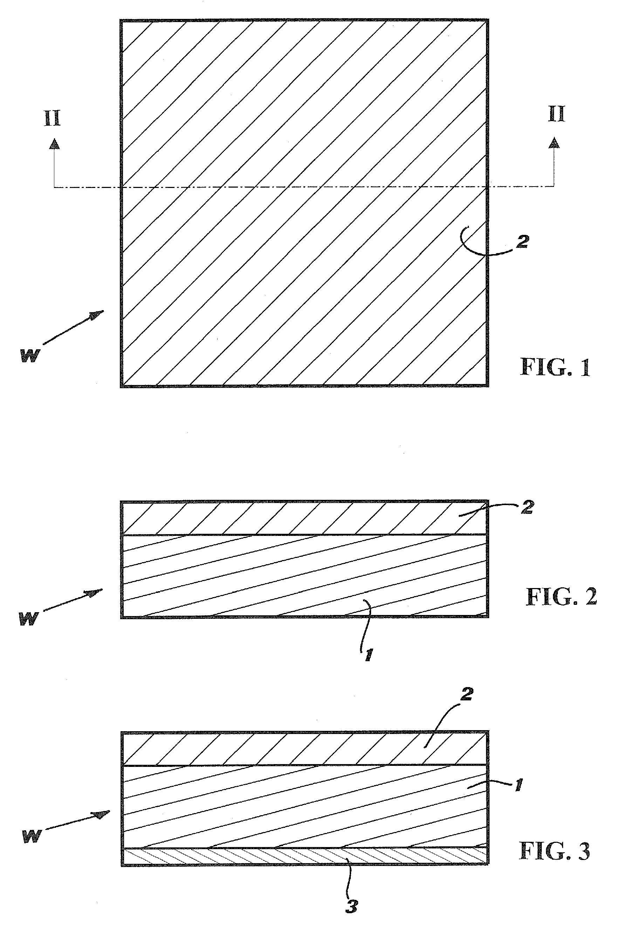

As shown in figs. 1 and 2, in a first embodiment thereof, the wrapping W of the present invention essentially consists of a film 1 of a plastic material having shape memory, on a surface whereof a continuous layer of a heat-seal lacquer 2 is applied. The plastic material making up film 1 may be chosen among one of the number of materials with shape memory available on the market, such as polypropylene, polystyrene, polyester, polyethylene, polyamide (nylon), and other resins of this type. Particularly suited are polypropylene and polyester.

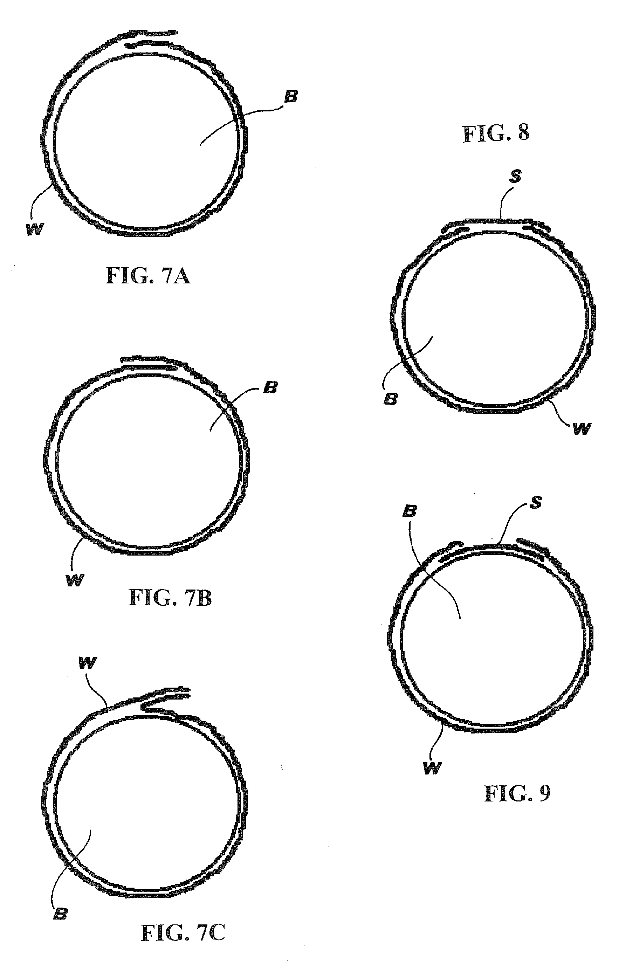

Wrapping W is formed using a small-thickness film 1, typically a thickness below 40 µm and preferably a thickness ranging between 6 and 20 µm, whereon a layer 2 of heat-seal lacquer is applied, relatively thick if compared to the usual thickness values with which these adhesive layers are formed, and preferably in an amount of at least 2 g/m². The layer of heat-seal lacquer 2 is preferably formed on the "inner" surface of wrapping 2, i.e. on the one intended to come into contact with the item B to be packaged (see figs. 7) and, advantageously, consists of a lacquer capable of showing a moderate degree of adhesiveness/stickiness also at room temperature.

The above-described wrapping W is thus capable of providing - during the wrapping around and folding process onto item B to be packaged - a behaviour substantially comparable to that of materials of the known art lacking shape memory, wrapping W hence being suggested as an extremely valid alternative to such materials. This effect is considered to be due to the combined use of a film of a small-thickness, plastic material with shape memory - which is hence capable of imparting a "recovery" force of a sufficiently low value - and the presence of a layer 2 of a large-thickness heat-seal lacquer, which is capable of contrasting with its weight the lifting from the upper part of item B of the wrapping folded on the same, such effect being further improved by the moderate adhesiveness at room temperature which the lacquer may have. As a matter of fact, thanks to such adhesiveness, already at the end of the wrapping around and folding step of wrapping W, a temporary pre-adhesion is determined between the individual folds of the upper ruffled portion of wrapping W and between the same and item B. This last adhesion naturally varies depending on the material being packaged, and is for example particularly significant in the case of cheese bites, considering that these are normally coated with a layer of wax.

When wrapping W according to the present invention is wrapped around and folded onto the item B to be packaged according to the conventional sealing system - i.e. with a folding and ruffling of the wrapping in the upper portion of item B - it indeed forms, due to the adaptation to the roundish form of said item, a series of folds and ruffles in the upper part of the packaging. The possible arrangements of such folds are schematically illustrated in figs. 7A, 7B and 7C, where one can see how the layer of heat-seal lacquer 2, arranged on the inner surface of wrapping W arranges itself either on the outer surface of the wrapping (figs. 7A and 7B) or on the inner surface itself (fig. 7C), hence allowing in any case to have a good adhesion between the overlapping layers of each individual fold and consequently an overall extremely stable folded-over arrangement of wrapping W at the end of the wrapping around step onto item B. Such item may hence be transferred without any problem to the subsequent step of thermal sealing of the thus folded area of wrapping W where, for the same reasons, it is possible to obtain a perfect seal of the wrapping.

In order to improve the seal in correspondence of the folds of the type illustrated in figs. 7A and 7B wherein there is contact between the inner surface and the outer surface of wrapping W, especially in case said outer surface is shiny or printed, it is possible to provide the outer surface of wrapping W with an additional layer of heat-seal lacquer 3. Layer 3 has the mere function of aiding thermal sealing and hence preferably has a small thickness, which preferably implies an amount of lacquer of about 0.5 g/m², and is chosen among the lacquers which are completely dry to the touch at room temperature, i.e. which do not show any degree of adhesiveness or stickiness.

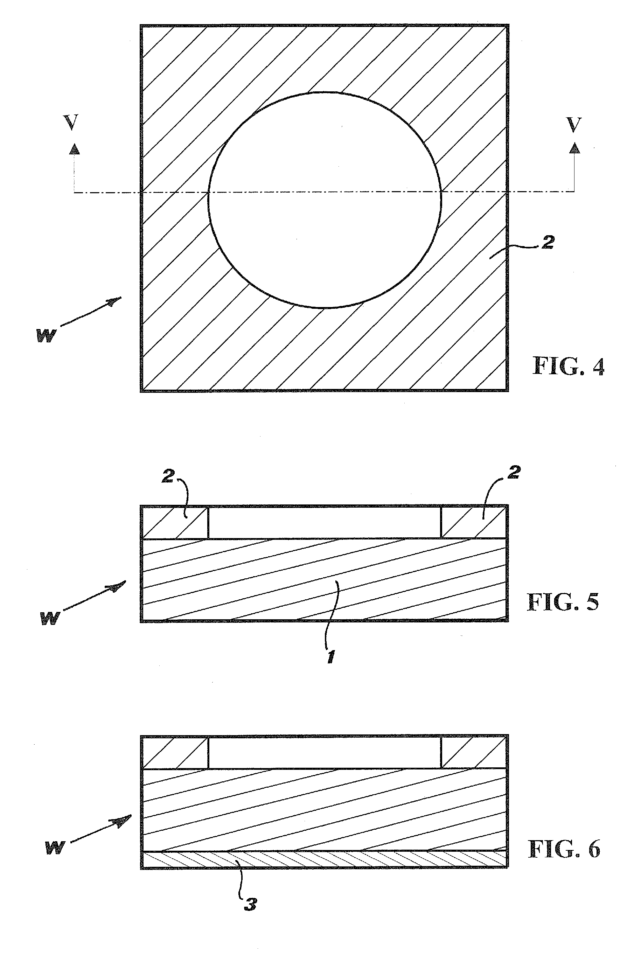

In the second embodiment of the invention, illustrated in figs. 4, 5 and 6, the layer of heat-seal lacquer 2 is not applied in a continuous manner throughout the entire inner surface of the wrapping, but only on a peripheral portion of the same (fig. 4) intended to form the upper folded and ruffled area, thereby obtaining a considerable saving of heat-seal lacquer, the performances of wrapping W being equal. The application of the layer of heat-seal lacquer 2 in this case is preferably carried out through a register printing process, during which the normal decorative/illustrative printouts of the product are also produced. The same concept of partial application of the layer of heat-seal lacquer only in the areas where the same exercises its function, i.e. in the peripheral portion of wrapping W, can of course be applied also to layer 3 on the outer surface of wrapping W.

As already said above, a first sealing system of wrapping W is the conventional one of folding and ruffling the wrapping on the upper part of the item B to be packaged. However, the wrapping W according to the present invention is particularly well-suited to be used also with other innovative sealing systems, which are illustrated in figs. 8 and 9 and which are described in the following.

In both these sealing systems, the size of wrapping W is smaller than that which is used for the conventional sealing system, so that during the wrapping around and folding step no overlapping of wrapping W on the upper part of item B is determined, hence leaving a small non covered area of said item. This allows to have smaller folds as well as a smaller number thereof, and hence, all in all, a more compact packaging adhering to item B.

The upper area of item B, which thus remains non covered by wrapping W, is sealed by means of a seal S, of a circular or polygonal shape, which may be applied either after the wrapping around operation of wrapping W (fig. 8) or before the same (fig. 9). During the subsequent sealing operation, seal S perfectly joins to the folded edges of wrapping W, thereby determining a stable seal of the packaging. Seal S preferably consists of a film of the same plastic material making up wrapping W, suitably provided, on the surface intended to overlap on wrapping W, with a heat-seal layer, such as a heat-seal lacquer or a hot-melt adhesive.

In the sealing system illustrated in fig. 9, wherein seal S is applied before the wrapping around operation of wrapping W, it is preferable for the inner surface of the seal, i.e. the one intended to come into contact with the item to be packaged, to be provided with a layer which is adhesive at roomtemperature, in order to allow a provisional anchoring onto item B before the wrapping around operation of wrapping W.

The wrapping W of the present invention, some preferred embodiments whereof have been described above, allows to obtain a number of remarkable advantages with respect to the cellophane wrapping of the prior art.

Firstly, as we have seen, the cost of such a wrapping is remarkably lower, thanks to the use of a film of plastic material which inherently has a cost between one third and one fourth of the cost of the cellophane film.

Secondly, thanks to the fact that the melting temperatures of the above-indicated plastic materials with shape memory are all remarkably higher than those of cellophane and, at the same time, the sealability temperature thereof is lower, it is possible to achieve a dramatic productivity increase in the packaging process.

The contact pressure of the sealing jaws being equal, as a matter of fact it is possible to increase the temperature of said jaws and reduce accordingly the time required to adequately seal the material. This time also being further reduced due to the fact that the overall thickness of the film forming wrapping W is smaller than that of the conventional cellophane film and hence heat entry into the same is faster.

Thirdly, the reduced thickness of wrapping W allows to greatly reduce the force applied during the wrapping around and folding process of the wrapping on item B, so that also from this point of view the packaging process is simplified and accelerated.

Fourthly, wrapping W according to the present invention allows a greater flexibility of use, especially as far as printing and dying systems are concerned. As a matter of fact, cellophane is normally delivered by the manufacturer already mass-dyed and provided with a heat-seal lacquer on both surfaces, because the poor machinability characteristics thereof advise against carrying out these operations subsequently. Thereby, however, the user's freedom is limited by the fact that the printouts concerning the graphics of the product cannot be carried out on the peripheral area of the wrapping, which at that point would lose its sealing capability. Moreover, the printouts made on these cellophane films, already dyed and coated with heat-seal lacquer, display a smaller adhesion of the print, and a greater capability of adequately "covering", especially with light colours, the pre-existing mass dying. On the contrary, the films of plastic materials having shape memory used for manufacturing the wrapping W of the present invention, are printed with product graphics and with the possible background colouring before applying the layers of heat-seal lacquer 2 and 3, so that these elements may be applied to the film with a normal printing process or a register printing process, obtaining better results in terms of printing quality and a saving of raw material due to the opportunity of applying the heat-seal layer only in the areas where it is actually necessary.

Fifthly, it must be pointed out that the system of closing by means of a seal is furthermore particularly suited for applications of a promotional character, wherein the seal is associated with the manufacturer's trademark and information or prizes on promotional campaigns under way, preferably in the version illustrated in fig. 9.

The wrapping W of the present invention has been described with reference to some preferred embodiments of the same, but it is clear that a number of variants and devices within the reach of a person skilled in the field may be made to adapt the wrapping to any specific application, without departing from the scope of the invention, which is hence defined exclusively by the accompanying claims.

## Claims

1. wrapping (W) for packaging small items (B), in particular cheese bites, sweets, sugared almonds, chocolates, boeri or the like, by wrapping around and folding said wrapping (W) onto the item (B) to be packaged and subsequently thermally sealing its peripheral portion, **characterised in that** the wrapping (W) consists of a film (1) of plastic material having shape memory, provided, on at least part of the inner surface thereof, with a layer of heat-seal lacquer (2).

2. Wrapping (W) as claimed in claim 1), wherein said plastic material having shape memory is chosen from the group consisting of polypropylene, polystyrene, polyester, polyethylene, polyamide (nylon).

3. Wrapping (W) as claimed in claim 2), wherein said plastic material has a thickness below 40 µm.

4. Wrapping (W) as claimed in claim 3), wherein said plastic material has a thickness ranging between 6 and 20 µm.

5. Wrapping (W) as claimed in claim 1), wherein said layer of heat-seal lacquer (2) consists of a lacquer capable of showing a moderate degree of adhesiveness/stickiness at room temperature.

6. Wrapping (W) as claimed in claim 1), wherein said layer of heat-seal lacquer (2) has a thickness equal to at least 2 g/m².

7. Wrapping (W) as claimed in any one of the preceding claims, furthermore provided with a layer of heat-seal lacquer (3) on at least part of its outer surface.

8. Wrapping (W) as claimed in claim 7), wherein said layer of heat-seal lacquer (3) formed on the outer surface of the wrapping is formed with a lacquer which is completely dry to the touch at room temperature.

9. Wrapping (W) as claimed in claim 8), wherein said layer of heat-seal lacquer (3) formed on the outer surface of the wrapping has a thickness of about 0.5 g/m².

10. Wrapping (W) as claimed in any one of the preceding claims, wherein one or both said inner layer (2) and outer layer (3) of heat-seal lacquer extend across the entire surface of the wrapping (W).

11. Wrapping (W) as claimed in any one of the preceding claims, wherein one or both said inner layer (2) or outer layer (3) of heat-seal lacquer extend only throughout a peripheral portion of the wrapping (W).

12. Wrapping (W) as claimed in any one of the preceding claims, wherein printing of the product graphics and any background colour is formed directly on said film of plastic material, before the application of said layers of heat-seal lacquer.

13. Wrapping (W) **characterised in that** it comprises a main component as defined in any one of the preceding claims, the peripheral portion whereof, once wrapped around, does not fully cover the item (B) to be packaged, and an additional component consisting of a separate seal (S) capable of sealing the area not covered by the main component and of joining with the same during the heat-seal operation.

14. Wrapping (W) as claimed in claim 13), wherein said seal (S) is arranged outside the main component of the wrapping, and consists of a film of plastic material internally coated with a layer of heat-seal lacquer or hot-melt adhesive dry to the touch.

15. Wrapping (W) as claimed in claim 13), wherein said seal (S) is arranged on the inside of the main component of the wrapping, and consists of a film of plastic material coated externally with a layer of heat-seal lacquer or hot-melt adhesive dry to the touch and, internally, with a layer of heat-seal lacquer or hot-melt adhesive displaying adhesiveness/stickiness at room temperature.
